# EUROPEAN PATENT SPECIFICATION

(11) **EP 4 234 065 B1**
(45) Date of publication and mention of the grant of the patent: **02.04.2025**
(21) Application number: 22305203.6
(22) Date of filing: 24.02.2022
(51) Int. Cl.: B01D 46/00, B01D 46/10, B01D 46/42, F02M 35/14

(54) **HOUSING FOR A FILTER ELEMENT AND FILTER SYSTEM COMPRISING A HOUSING**
GEHÄUSE FÜR EIN FILTERELEMENT UND FILTERSYSTEM, DAS EIN GEHÄUSE UMFASST
BOÎTIER POUR UN ÉLÉMENT DE FILTRE ET SYSTÈME DE FILTRE COMPRENANT UN BOÎTIER

(43) Date of publication of application: 30.08.2023
(73) Proprietor: MANN+HUMMEL GmbH, 71636 Ludwigsburg (DE)
(72) Inventor: WARNERY, Stéphane, 53970 L'HUISSERIE (FR); FOULBOEUF, Gwenael, 53260 ENTRAMMES (FR); LAUNAY, Tristan, 72000 LE MANS (FR)
(74) Representative: Mann + Hummel Intellectual Property

(56) References cited:
- EP-A2- 2 138 700
- DE-A1- 10 331 950
- DE-A1- 102004 013 654
- DE-A1- 102004 043 335
- DE-U1- 202006 012 659
- US-A1- 2016 325 218

## Description

### Technical Field

The invention relates to a housing for a filter element and a filter system comprising a housing, in particular to a filter system comprising a noise reducing component.

### Prior Art

In DE102007039048A1 an air cleaner is disclosed, having an inlet air channel comprising an acoustic channel section with air-tight barrier areas and with a porous damping barrier segment. The acoustic channel section is an extruded plastic tube. The porous damping barrier segment is in-extruded between the air-tight barrier areas.

From DE 1 02004013654A1 an air intake device is known, having an intake air section with an air intake duct connected to an intake for ambient air, which serves as intake air path to an engine body. A permeable aperture has an opening located within part of the air section, to connect the section to its environment, and a porous element to cover the opening.

At DE10331950A1 a device is published having a tubular intake pipe with intake for ambient air, an air filter downstream in the intake pipe, and an air filter hose downstream of the filter, connected to a combustion chamber of an engine. Several transmission apertures closed by air-permeable elements are located in two of the components, e.g. intake pipe, filter, or hose.

DE 202006012659U1 shows an air filter system for an internal combustion engine wherein a filter chamber is provided in the air filter housing to accommodate the filter element, whereby the filter chamber communicates with an inflow channel on the raw air side and with an outflow channel on the clean air side. The housing wall of the air filter housing at least one additional opening connected to the filter chamber, which is covered by an air-permeable, porous cover layer.

DE102004043335A1 displays a noise configuration device for use in motor vehicle, having an air duct provided in area within which highest acoustic pressure is present in proximity to resonant frequency of air duct which is locked with noise absorbing material.

In EP2138700A2 a filter housing can be found including two housing shells manufactured from plastic and a filter element separates a dirty side chamber from a clean side chamber. The filter housing having a loudspeaker membrane, an electromagnetic actuator and a loudspeaker housing for accommodating the actuator.

An air cleaner is presented in US20160325218A1 including a hollow case, a filter element, and an opening end member. The hollow case defines an expanded space; the filter element defines an upstream-side expanded space and a downstream-side expanded space in the expanded space; the opening end member is formed from a material having an air permeability.

### Disclosure of the Invention

It is an object of the invention to provide a housing for a filter element with improved acoustic properties.

It is another object of the invention to provide a filter system comprising a housing with improved acoustic properties.

One object is achieved by a housing for a filter element, in particular for an air cleaner, in particular for a combustion engine or for a fuel cell application, having an inlet in fluid connection with a raw side volume and an outlet in fluid connection with a clean side volume, the raw side volume being arranged in a first housing shell and the clean side volume being arranged in a second housing shell, the volumes being configured to be separated by the filter element when mounted in the housing. A segment of the first housing shell constitutes an outer wall of an inlet duct, the inlet duct extending into the first housing shell, the inlet duct comprising at least one acoustically effective element arranged at least partially inside the housing shell and being configured to emit acoustic noise coming through the clean side volume at least into the raw side volume.

Another object is achieved by a filter system, in particular for an air cleaner, in particular for a combustion engine or for a fuel cell application, comprising a housing, wherein a filter element, in particular an exchangeable filter element, is accommodated in the housing, the housing having an inlet in fluid connection with a raw side volume and an outlet in fluid connection with a clean side volume, the raw side volume being arranged in a first housing shell and the clean side volume being arranged in a second housing shell, the volumes being configured to be separated by the filter element when mounted in the housing, wherein a segment of the first housing shell constitutes an outer wall of an inlet duct, the inlet duct extending into the first housing shell, the inlet duct comprising at least one acoustically effective portion arranged at least partially inside the housing shell and being configured to emit acoustic noise coming through the clean side volume at least into the raw side volume.

Advantageous embodiments of the invention are described in the dependent claims, the description and the drawings.

According to an aspect of the invention, a housing for a filter element is proposed, in particular for an air cleaner, in particular for a combustion engine or for a fuel cell application, having an inlet in fluid connection with a raw side volume and an outlet in fluid connection with a clean side volume, the raw side volume being arranged in a first housing shell and the clean side volume being arranged in a second housing shell, the volumes being configured to be separated by the filter element when mounted in the housing. A segment of the first housing shell constitutes an outer wall of an inlet duct, the inlet duct extending into the first housing shell, the inlet duct comprising at least one acoustically effective element arranged at least partially inside the housing shell and being configured to emit acoustic noise coming through the clean side volume at least into the raw side volume.

By integrating the inlet duct into the housing it is possible to create a favorable acoustic communication between the inlet duct and the housing of the filter system via the at least one acoustically effective element.

Advantageously, the acoustic efficiency can be increased as well as a cost efficient housing provided.

According to the invention, at least one acoustically effective element is a damper element in the type of a porous medium. One or more patches of the porous medium may be arranged in the wall of the inlet duct. For instance in an air cleaner of a combustion engine or a fuel cell application, the engine or fuel cell noise level can be reduced with the at least one acoustically effective element and the acoustic connection with the housing. In particular, the first housing shell accommodating the raw side volume and the inlet duct may be the same part.

The porous damping element may be made of a plastic material part, particularly from materials such as polyethylene (PE), polypropylene (PP) or polyamide (PA) or mixtures therefrom.

The acoustically effective element is be arranged in the outer wall of the inlet duct. The acoustic efficiency can be increased further.

According to the invention, the inlet duct is in fluid connection with the raw side volume through an orifice. In particular the orifice may have a larger cross section than the inlet. The arrangement can be optimized for the fabrication process, such as injection molding. According to a favorable embodiment of the housing, the outer wall of the inlet duct and the first housing shell may be composed of the same material. In particular, the housing may be made of plastic material.

According to a favorable embodiment of the housing, the outer wall of the inlet duct and the first housing shell may be composed of different materials. In particular, the housing and the outer wall of the inlet duct may be made of different plastic materials. Advantageously, this allows for applications where the inlet duct has a crooked shape, in particular due to limited mounting space for the housing or other packaging requirements, e.g. in an automotive ambient.

The inlet duct extends with a tube section from the first housing shell. Favorably, the housing with the integrated inlet duct can be adapted to mounting and space requirements for the housing.

According to a favorable embodiment of the housing, the tube section may comprise a material different from the first housing shell and/or from the outer wall of the inlet duct. Favorably, the housing with the integrated inlet duct can be adapted to mounting and space requirements for the housing.

According to another aspect of the invention, a filter system is proposed, in particular for an air cleaner, in particular for a combustion engine or for a fuel cell application, comprising a housing, wherein a filter element, in particular an exchangeable filter element, is accommodated in the housing, the housing having an inlet in fluid connection with a raw side volume and an outlet in fluid connection with a clean side volume, the raw side volume being arranged in a first housing shell and the clean side volume being arranged in a second housing shell, the volumes being configured to be separated by the filter element when mounted in the housing, wherein a segment of the first housing shell constitutes an outer wall of an inlet duct, the inlet duct extending into the first housing shell, the inlet duct comprising at least one acoustically effective portion arranged at least partially inside the housing shell and being configured to emit acoustic noise coming through the clean side volume at least into the raw side volume.

By integrating the inlet duct into the housing of the filter system it is possible to create a favorable acoustic communication between the inlet duct and the housing of the filter system via the at least one acoustically effective element.

Advantageously, the acoustic efficiency of the filter system can be increased as well as a cost efficient housing provided.

At least one acoustically effective element is arranged in the outer wall of the inlet duct. The acoustical efficiency can be improved further.

The inlet is in fluid connection with the raw side volume through an orifice. In particular the orifice may have a larger cross section than the inlet. The arrangement of the filter system can be optimized for the fabrication process of the housing, such as injection molding.

According to a favorable embodiment of the filter system, the outer wall of the inlet duct and the first housing shell may be composed of the same material. In an alternative embodiment the outer wall of the inlet duct and the first housing shell may be composed of different materials. The housing of the filter system can easily be adapted to packaging and process requirements.

The inlet duct extends with a tube section from the first housing shell. The housing of the filter system can easily be adapted to packaging and mounting space requirements.

According to a favorable embodiment of the filter system, the tube section may comprise a material different from the first housing shell and/or from the outer wall of the inlet duct. The construction of the housing of the filter system can easily be adapted to packaging and process requirements.

### Brief Description of the Drawings

The present invention together with the above-mentioned and other objects and advantages may best be understood from the following detailed description of the embodiments, but not restricted to the embodiments, wherein is shown in:
Figure 1 in a cut view an embodiment of a filter system according to the invention;
Figure 2 in a cut view a further embodiment of a filter system according to the invention;
Figure 3 in a cut view a further embodiment of a filter system according to the invention;
Figure 4 in a cut view a further embodiment of a filter system according to the invention.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

For instance, the filter system 100 described in the Figures may be used as an air cleaner, in particular for a combustion engine or for a fuel cell application.

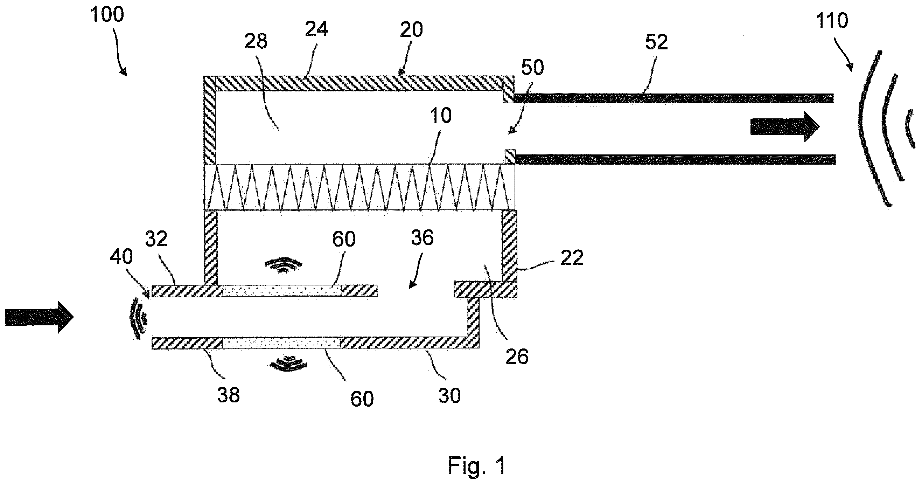

Figure 1 illustrates in a cut view an embodiment of a filter system 100 according to the invention. The filter system 100 comprises a housing 20 for a filter element 10. The filter element 10 may be configured generally as a flat body having, e.g., a pleated filter medium.

As can be seen in Figures 1-4, the housing comprises an inlet 40 in fluid connection with a raw side volume 26 and an outlet 50 in fluid connection with a clean side volume 28. The raw side volume 26 is arranged in a first housing shell 22 and the clean side volume 28 is arranged in a second housing shell 24. The volumes 26, 28 are separated by the filter element 10. The first and second housing shells 22, 24 may be detachably connected to each other so that the filter element 10 may be removed and replaced by a new filter element 10.

A segment 30 of the first housing shell 22 constitutes an outer wall 38 of an inlet duct 32, which extends into the first housing shell 22. The inlet duct 32 comprises at least one acoustically effective element 60 arranged at least partially inside the housing shell 22 and, in the embodiments shown, in the outer wall 38 of the inlet duct 32, too.

The housing is connected to a noise source 110, e.g. an engine, by an outlet tube 52. The fluid flow from the inlet duct 32 to the outlet duct 52 is indicated by bold arrows. The noise from the noise source 110 travels from the outlet duct 52 through the filter element 100 to the inlet duct 32.

The acoustically effective element 60 **is** a damper element made of a porous material and being configured to emit acoustic noise coming from a noise source 110, such as an engine, through the clean side volume 28 at least into the raw side volume 26. The acoustically effective element 60 may be made of a plastic material.

The inlet duct 32 is directly acoustically coupled to the raw side volume 26 and can effectively reduce the noise coming from source 110.

The inlet duct 32 is in fluid connection with the raw side volume 26 through an orifice 36. As can be seen in Figure 1, the outer wall 38 of the inlet duct 32 and the first housing shell 22 may be composed of the same material.

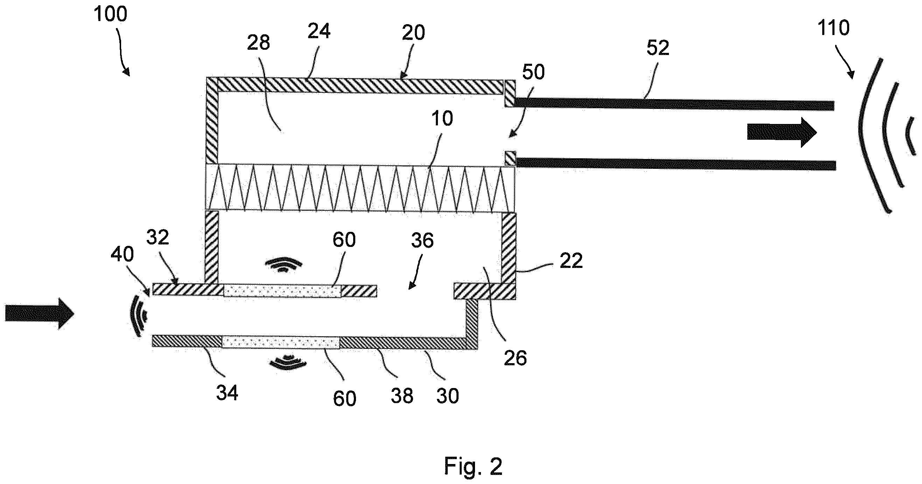

As can be seen in Figure 2, the outer wall 38 of the inlet duct 32 and the first housing shell 22 are composed of different materials. The outer wall 38 may consist of a material 34.

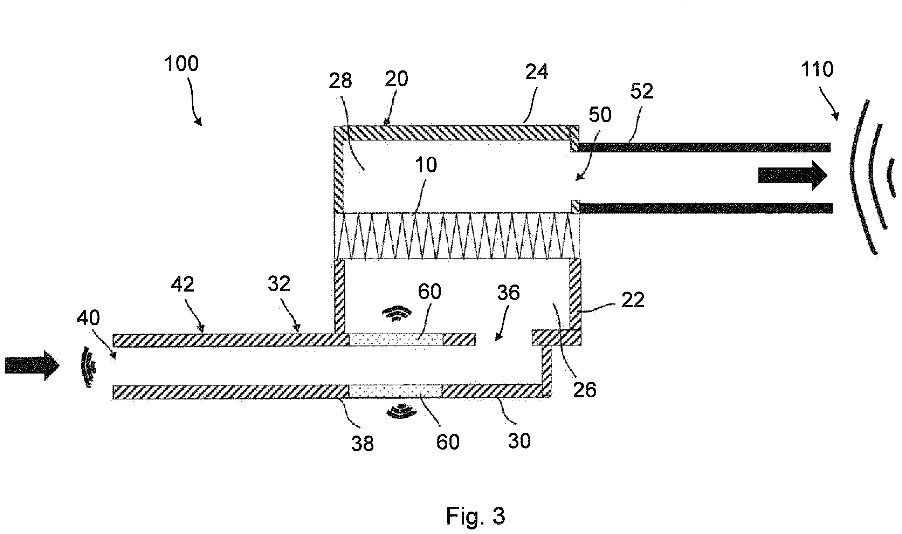

As can be seen in Figure 3, the inlet duct 32 extends with a tube section 42 from the first housing shell 22. This allows to attach the inlet duct 32 to a remote fluid source (not shown).

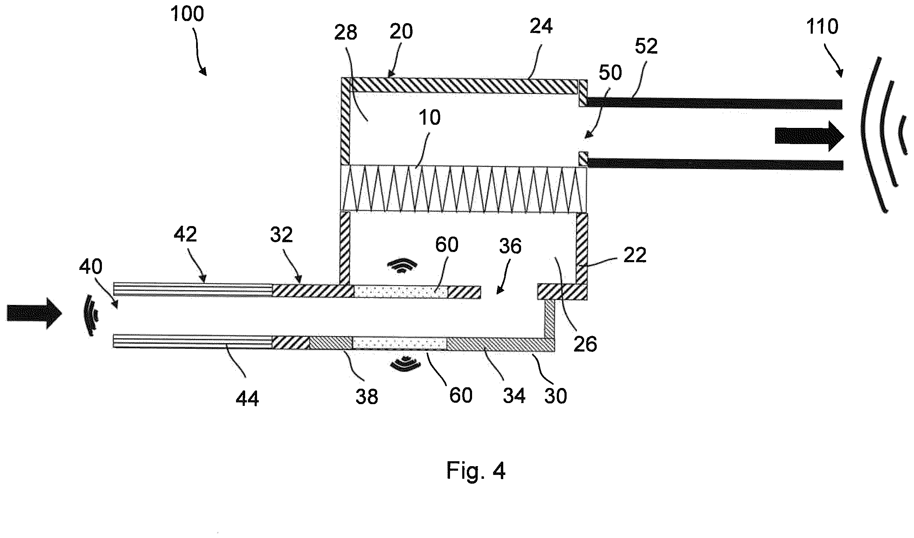

As can be seen in Figure 4, the tube section 42 may comprise a material 44 different from the first housing shell 22 and from the outer wall 38 of the inlet duct 32. The housing 20 can be easily attached to other parts in the mounting area of the filter system 100.

### Reference Numbers

- 10: filter element
- 12: filter medium
- 20: housing
- 22: first housing shell
- 24: second housing shell
- 26: raw side volume
- 28: clean side volume
- 30: shell segment
- 32: inlet duct
- 34: material
- 36: orifice
- 38: outer wall
- 40: inlet
- 42: tube section
- 44: material
- 50: outlet
- 52: outlet duct
- 60: acoustically effective portion
- 100: filter system

## Claims

1. A housing (20) for a filter element (10), in particular for an air cleaner,
having an inlet (40) in fluid connection with a raw side volume (26) and an outlet (50) in fluid connection with a clean side volume (28),
the raw side volume (26) being arranged in a first housing shell (22) and the clean side volume (28) being arranged in a second housing shell (24),
the volumes (26, 28) being configured to be separated by the filter element (10) when mounted in the housing (20),
wherein a segment (30) of the first housing shell (22) constitutes an outer wall (38) of an inlet duct (32), the inlet duct (32) extending into the first housing shell (22),
the inlet duct (32) comprising at least one damper element (60) in the type of a porous medium as acoustically effective element (60) arranged at least partially inside the housing shell (22) and being configured to emit acoustic noise coming through the clean side volume (28) at least into the raw side volume (26), wherein the at least one damper element (60) is arranged in the outer wall (38) of the inlet duct (32) and an outer wall (38) of the first housing shell (22), wherein the inlet duct (32) is in fluid connection with the raw side volume (26) through an orifice (36), wherein the inlet duct (32) extends with a tube section (42) from the first housing shell (22).

2. The housing according to claim 1, wherein the orifice (36) has a larger cross section than the inlet (40).

3. The housing according to any one of the claims 1 or 2, wherein the outer wall (38) of the inlet duct (32) and the first housing shell (22) are composed of the same material.

4. The housing according to any one of the claims 1 to 3, wherein the outer wall (38) of the inlet duct (32) and the first housing shell (22) are composed of different materials.

5. The housing according to claim 4, wherein the tube section (42) comprises a material different from the first housing shell (22) and/or from the outer wall (38) of the inlet duct (32).

6. A filter system (100), in particular for an air cleaner, comprising a housing (20), according to any one of the preceding claims, wherein a filter element (10), in particular an exchangeable filter element (10), is accommodated in the housing (20), the housing (20) having an inlet (40) in fluid connection with a raw side volume (26) and an outlet (50) in fluid connection with a clean side volume (28),
the raw side volume (26) being arranged in a first housing shell (22) and the clean side volume (28) being arranged in a second housing shell (24),
the volumes (26, 28) being configured to be separated by the filter element (10) when mounted in the housing (20),
wherein a segment (30) of the first housing shell (22) constitutes an outer wall (38) of an inlet duct (32), the inlet duct (32) extending into the first housing shell (22),
the inlet duct (32) comprising one damper element in the type of a porous medium as an acoustically effective portion (60) arranged at least partially inside the housing shell (22) and being configured to emit acoustic noise coming through the clean side volume (28) at least into the raw side volume (26).

7. The filter system according to claim claim 6, wherein the orifice (36) has a larger cross section than the inlet (40).

8. The filter system according to any one of the claims 6 to 7, wherein the outer wall (38) of the inlet duct (32) and the first housing shell (22) are composed of the same material.

9. The filter system according to any one of the claims 6 to 7, wherein the outer wall (38) of the inlet duct (32) and the first housing shell (22) are composed of different materials.

10. The filter system according to claims 6-9, wherein the tube section (42) comprises a material different from the first housing shell (22) and/or from the outer wall (38) of the inlet duct (32).

## Patentansprüche

1. Gehäuse (20) für ein Filterelement (10), insbesondere für einen Luftreiniger, mit einem Einlass (40), der in Fluidverbindung mit einem Volumen auf der Rohseite (26) steht, und einem Auslass (50), der in Fluidverbindung mit einem Volumen auf der Reinseite (28) steht,
wobei das Volumen auf der Rohseite (26) in einer ersten Gehäuseschale (22) und das Volumen auf der Reinseite (28) in einer zweiten Gehäuseschale (24) angeordnet ist,
wobei die Volumina (26, 28) so konfiguriert sind, dass sie durch das Filterelement (10) getrennt werden, wenn es im Gehäuse (20) montiert ist,
wobei ein Segment (30) der ersten Gehäuseschale (22) eine Außenwand (38) eines Einlasskanals (32) bildet, wobei sich der Einlasskanal (32) in die erste Gehäuseschale (22) erstreckt,
der Einlasskanal (32) umfassend mindestens ein Dämpfungselement (60) in der Art eines porösen Mediums als akustisch wirksames Element (60), das mindestens teilweise innerhalb der Gehäuseschale (22) angeordnet ist und so konfiguriert ist, dass es akustische Geräusche, die durch das Volumen auf der Reinseite (28) kommen, mindestens in das Volumen auf der Rohseite (26) abstrahlt, wobei das mindestens eine Dämpfungselement (60) in der Außenwand (38) des Einlasskanals (32) und einer Außenwand (38) der ersten Gehäuseschale (22) angeordnet ist, wobei der Einlasskanal (32) über eine Öffnung (36) in Fluidverbindung mit dem Volumen auf der Rohseite (26) steht, wobei sich der Einlasskanal (32) mit einem Rohrabschnitt (42) von der ersten Gehäuseschale (22) erstreckt.

2. Gehäuse nach Anspruch 1, wobei die Öffnung (36) einen größeren Querschnitt als der Einlass (40) hat.

3. Gehäuse nach einem der Ansprüche 1 oder 2, wobei die Außenwand (38) des Einlasskanals (32) und die erste Gehäuseschale (22) aus demselben Material bestehen.

4. Gehäuse nach einem der Ansprüche 1 bis 3, wobei die Außenwand (38) des Einlasskanals (32) und die erste Gehäuseschale (22) aus unterschiedlichen Materialen bestehen.

5. Gehäuse nach Anspruch 4, wobei der Rohrabschnitt (42) ein Material umfasst, das sich von dem der ersten Gehäuseschale (22) und/oder der Außenwand (38) des Einlasskanals (32) unterscheidet.

6. Filtersystem (100), insbesondere für einen Luftreiniger, umfassend ein Gehäuse (20), nach einem der obigen Ansprüche, wobei ein Filterelement (10), insbesondere ein austauschbares Filterelement (10), in dem Gehäuse (20) aufgenommen ist, wobei das Gehäuse (20) einen Einlass (40) in Fluidverbindung mit einem Volumen auf der Rohseite (26) und einen Auslass (50) in Fluidverbindung mit einem Volumen auf der Reinseite (28) hat,
wobei das Volumen auf der Rohseite (26) in einer ersten Gehäuseschale (22) und das Volumen auf der Reinseite (28) in einer zweiten Gehäuseschale (24) angeordnet ist,
wobei die Volumina (26, 28) so konfiguriert sind, dass sie durch das Filterelement (10) getrennt werden, wenn es in dem Gehäuse (20) installiert ist,
wobei ein Segment (30) der ersten Gehäuseschale (22) eine Außenwand (38) eines Einlasskanals (32) bildet, wobei sich der Einlasskanal (32) in die erste Gehäuseschale (22) erstreckt,
wobei der Einlasskanal (32) ein in der Art eines porösen Mediums als akustisch wirksamen Abschnitt (60), der mindestens teilweise innerhalb der Gehäuseschale (22) angeordnet ist und so konfiguriert ist, dass er akustisches Rauschen, das durch das Volumen auf der Reinseite (28) kommt, mindestens in das Volumen auf der Rohseite (26) abgibt.

7. Filtersystem nach Anspruch 6, wobei die Öffnung (36) einen größeren Querschnitt als der Einlass (40) hat.

8. Filtersystem nach einem der Ansprüche 6 bis 7, wobei die Außenwand (38) des Einlasskanals (32) und die erste Gehäuseschale (22) aus demselben Material bestehen.

9. Filtersystem nach einem der Ansprüche 6 bis 7, wobei die Außenwand (38) des Einlasskanals (32) und die erste Gehäuseschale (22) aus unterschiedlichen Materialen bestehen.

10. Filtersystem nach den Ansprüchen 6 bis 9, wobei der Rohrabschnitt (42) ein Material umfasst, das sich von dem der ersten Gehäuseschale (22) und/oder der Außenwand (38) des Einlasskanals (32) unterscheidet.

## Revendications

1. Boîtier (20) pour un élément filtrant (10), notamment pour un épurateur d'air, ayant une entrée (40) en communication fluidique avec un volume côté brut (26) et une sortie (50) en communication fluidique avec un volume côté pur (28),
le volume côté brut (26) étant disposé dans une première enveloppe de boîtier (22) et le volume côté pur (28) étant disposé dans une deuxième enveloppe de boîtier (24),
les volumes (26, 28) étant configurés pour être séparés par l'élément filtrant (10) lorsqu'il est monté dans le boîtier (20),
dans lequel un segment (30) de la première enveloppe de boîtier (22) constitue une paroi extérieure (38) d'un conduit d'admission (32), le conduit d'admission (32) s'étendant à l'intérieur de la première enveloppe de boîtier (22),
le conduit d'admission (32) comprenant au moins un élément amortisseur (60) du type d'un milieu poreux en tant qu'élément acoustiquement efficace (60) disposé au moins partiellement à l'intérieur de l'enveloppe de boîtier (22) et étant configuré pour émettre un bruit acoustique traversant le volume côté pur (28) au moins dans le volume côté brut (26), dans lequel l'au moins un élément amortisseur (60) est disposé dans la paroi extérieure (38) du conduit d'admission (32) et dans une paroi extérieure (38) de la première enveloppe de boîtier (22), dans lequel le conduit d'admission (32) est en communication fluidique avec le volume côté brut (26) à travers un orifice (36), dans lequel le conduit d'admission (32) s'étend avec une section de tube (42) à partir de la première enveloppe de boîtier (22).

2. Boîtier selon la revendication 1, dans lequel l'orifice (36) a une section transversale plus grande que l'entrée (40).

3. Boîtier selon l'une quelconque des revendications 1 ou 2, dans lequel la paroi extérieure (38) du conduit d'admission (32) et la première enveloppe de boîtier (22) sont composées du même matériau.

4. Boîtier selon l'une quelconque des revendications 1 à 3, dans lequel la paroi extérieure (38) du conduit d'admission (32) et la première enveloppe de boîtier (22) sont composées de matériaux différents.

5. Boîtier selon la revendication 4, dans lequel la section de tube (42) comprend un matériau différent de la première enveloppe de boîtier (22) et/ou de la paroi extérieure (38) du conduit d'admission (32).

6. Système de filtre (100), notamment pour un épurateur d'air, comprenant un boîtier (20), selon l'une quelconque des revendications précédentes, dans lequel un élément filtrant (10), notamment un élément filtrant échangeable (10), est logé dans le boîtier (20), le boîtier (20) ayant une entrée (40) en communication fluidique avec un volume côté brut (26) et une sortie (50) en communication fluidique avec un volume côté pur (28),
le volume côté brut (26) étant disposé dans une première enveloppe de boîtier (22) et le volume côté pur (28) étant disposé dans une deuxième enveloppe de boîtier (24),
les volumes (26, 28) étant configurés pour être séparés par l'élément filtrant (10) lorsque celui-ci est monté dans le boîtier (20),
dans lequel un segment (30) de la première enveloppe de boîtier (22) constitue une paroi extérieure (38) d'un conduit d'admission (32), le conduit d'admission (32) s'étendant dans la première enveloppe de boîtier (22),
le conduit d'admission (32) comprenant un élément amortisseur du type d'un milieu poreux en tant qu'une section acoustiquement efficace (60) disposé au moins partiellement à l'intérieur de l'enveloppe de boîtier (22) et étant configuré pour émettre un bruit acoustique traversant le volume côté pur (28) au moins dans le volume côté brut (26).

7. Système de filtre selon la revendication 6, dans lequel l'orifice (36) a une section transversale plus grande que l'entrée (40).

8. Système de filtre selon l'une quelconque des revendications 6 à 7, dans lequel la paroi extérieure (38) du conduit d'admission (32) et la première enveloppe de boîtier (22) sont composées du même matériau.

9. Système de filtre selon l'une quelconque des revendications 6 à 7, dans lequel la paroi extérieure (38) du conduit d'admission (32) et la première enveloppe de boîtier (22) sont composées de matériaux différents.

10. Système de filtre selon les revendications 6 à 9, dans lequel la section de tube (42) comprend un matériau différent de la première enveloppe de boîtier (22) et/ou de la paroi extérieure (38) du conduit d'admission (32).
